# EUROPÄISCHE PATENTANMELDUNG

(11) **EP 1 151 788 A1**
(43) Veröffentlichungstag der Anmeldung: **07.11.2001**
(21) Anmeldenummer: 00109611.4
(22) Anmeldetag: 05.05.2000
(51) Int. Cl.: B01F 7/14, B01F 15/00, A21C 1/06, A21C 1/14, B01F 15/02

(54) **Knetmaschine mit Dosiervorrichtung**

(71) Anmelder: CARPOS S.A., 6901 Lugano 1 (CH)
(72) Erfinder: Pierluigi, Malfatti, 38057 Pergine (TN) (IT); Claudio, Torghele, 38100 Trento (IT)
(74) Vertreter: Oberosler, Ludwig

(57) **Zusammenfassung**

In einer Knetmaschine für die Zubereitung von Teig umfaßt die wesentlich zylindrische Kammer mit horizontaler Achse, innerhalb welcher koaxial oder parallel zu dieser Achse rotierende Knetorgane (4, 4c, 4b) wirken, zwischen zwei Mantelflächenabschnitten (1a) mit gleicher Mantellinie, zwei ebene Flächenabschnitte (1b, 1c) welche wesentlich durch die Oberfläche von gleitenden (2b, 3b) Schiebern (2, 3) mit oberer Beschickungsöffnung (2a) und unterer Auswurföffnung (3a) in Schließstellung gebildet sind, wobei besagte Flächen (1a, 1b, 1c) über Abrundungen (1g) mit mögnichst großem Radius in die zwei stirnseitigen, koaxialen, unter sich beabstandeten Kreisflächen (1e, 1f) übergehen um zusammen mit dem, mit unterschiedlichen Drehzahlen und mit Umkehrung der Drehrichtung, rotierenden (4a) Knetorgan (4, 4c, 4d) welches ebenfalls stark abgerundete Formen aufweist, die Zubereitung, Verdichtung und Zusammenballung einer Einzel-Teigportion zu ermöglichen welche, ohne Rückstände von Zutaten oder Teig, ausgeworfen wird. Die Dosiervorrichtung für die Beschickung der Knetmaschine mit volumetrisch kalibrierten und möglichst homogenisierten Dosis von mehlartigen Zutaten, weist eine zum zylindrischen Behälter (5, 5a, 5b) koaxial rotierende (8a), vertikale Welle (8) auf, welche Rührelemente (7a, 7b), einen Verteilerkonus (7) und eine Dosierscheibe (9a) mit, zueinander und zur Achse gleich beabstandeten, kranzartig angebrachten, Dosierbohrungen (9a) antreibt. Der Behälter der Dosiervorrichtung ist innen durch eine ringförmige, trichterartige Scheidewand (6) in einen oberen Behälter und in einen unteren kleineren Bereich für den Dosiermechanismus unterteilt.

## Beschreibung

Es sind Knetmaschinen für die Herstellung von Teig für die Zubereitung von Nahrungsmitteln bekannt welche die Funktion von einer oder von zwei Förderschnecken, von innerhalb feststehender oder rotierender Behälter, nach vertikaler oder angewinkelter Achse, rotierenden Knetarmen oder von, innerhalb geschlossener Gehäuse und nach horizontaler Achse rotierenden Rührelementen, nutzen.

Der spezifische Stand der Technik ergibt sich aus dieser letzteren Art von Knetmaschinen, welche also die Funktion von, innerhalb eines geschlossenen Gehäuses, nach horizontaler Achse rotierenden Rührelementen, nutzt.
- Die US 5,486,049 (Apparati for mixing fluid substances) zeigt eine Vorrichtung für das Mischen von flüssigen Substanzen welche unterschiedliche Viskosität aufweisen. Das Rührelement dieser Vorrichtung besteht aus mehreren, zueinander parallelen, Sprossen welche zwischen zwei koaxialen Scheiben, in gleichem Abstand zueinander und zu deren Rotationsachse, angeordnet sind.
- Die US 4,630,930 (High speed batch mixer) veröffentlicht ein Verfahren und eine Vorrichtung für die Herstellung einer Teigportion. Die Vorrichtung besteht aus zwei koaxialen Kammern, innerhalb welcher gesonderte Arbeitsphasen ablaufen welche durch voneinander getrennte und unterschiedliche Mischorgane, bzw. durch Knetorgane, ausgeführt werden. Die Zutaten für die Zubereitung des Teiges werden von oben in die erste Kammer eingeführt wo eine Durchmischung mit anschließender Weiterförderung in die zweite Kammer erfolgt, in dieser wird durch ein Knetorgan, bestehend aus zueinander parallelen Sprossen, welche an beiden Enden an entsprechenden radialen, in gleichen Winkeln abstehenden, sich um eine gemeinsame Achse drehenden, Armen befestigt sind, die Knetung durchgeführt. Die technischen Merkmale der zweiten Vorrichtung erfordern einer vorherige Durchmischung in einer, von der Knetkammer getrennten Mischkammer; die Mantellinien der inneren Mantelfläche der Mischkammer und der Knetkammer weisen eine, zur Rotationsachse des Knetorgans, koaxiale Rotationsachse auf.
- Die US 5,322,368 (Dough mixer) veröffentlicht eine Vorrichtung für die Zubereitung von Teig, welche aus einer zylindrischen Kammer mit horizontaler Achse besteht, welche im oberen Bereich eine Öffnung für die Beschickung durch freien Fall der Zutaten für die Zubereitung des Teiges und im unteren Bereich eine verschließbare Öffnung für den Auswurf des zubereiteten Teiges, aufweist. Der Arbeitsablauf innerhalb der Kammer erfolgt durch mehrere Rührflügel welche, zueinander beabstandet, an der selben Antriebswelle mit, zur Kammerachse versetzter aber paralleler Rotationsachse, im unteren Bereich der Kammer. Die Knetkammer dieser Vorrichtung kann geöffnet werden indem die scheibenförmige vertikale Wand, samt den Rührflügeln und samt der Wand der Mantelfläche, zur zweiten vertikalen scheibenförmigen Wand an welcher ein Schaber samt dem entsprechenden Antriebsmotor gelagert ist, axial verschiebbar ist.
- Es sind weiters kleinere mechanische Vorrichtungen für die Zubereitung von Teig in Haushalten bekannt; diese bestehen allgemein aus einem zylindrischen Behälter mit vertikaler Achse, innerhalb welchem ein oder mehrere, an einer einzigen, zur Behälterachse koaxialen Antriebswelle befestigte Rührflügel wirken.

All diese bekannten Vorrichtungen sind nicht für die Zubereitung von je einzelnen Teigportionen pro Arbeitszyklus, innerhalb relativ kurzer Zeitabschnitte und infolge von Beschickung mit Zutaten in Einzeldosis, konzipiert; weiters ist nicht vorgesehen, daß jede einzelne vermengte und zusammengeballte Teigportion, fertig für die Formgebung und den Backvorgang, ohne im Inneren der Vorrichtung Spuren von Zutaten oder Teigresten zu hinterlassen, ausgeworfen wird. Die bekannten Vorrichtungen sind weiters nicht konzipiert um eine periodische automatische Sterilisierung der Knetkammer, samt der in dieser vorgesehenen Knetorgane, ohne menschliche Einwirkung, durchführen zu können.

Es ist weiters das Problem der Beschickung von Knetvorrichtungen mit relativ genauer volumetrischer Dosierung des Mehles oder der mehl-, bzw. staubartigen, Zutaten, welche mehr oder weniger hygroskopisch sind, bekannt. Diese Probleme gründen auf der Tendenz, daß das mehlartige Material Überbrückungen oder Agglomerate im Innern der Behälter bildet, daß das Variieren des Materialvolumens über dem Dosiermechanismus, die Dosisbildung stark beeinflußt und daß es schwierig ist, die gleichmäßige Abfüllung und/oder Entleerung der Dosierkammern, zu erreichen.

Die Erfindung stellt sich die Aufgabe eine Knetmaschine der eingangs beschriebenen Art zu schaffen, welche eine einfache und kompakte Konstruktion aufweist, für die Durchführung einer automatischen Sterilisation geeignet ist, eine wesentlich zylindrische Kammer mit horizontaler Achse, in welcher ein sich mit horizontaler Drehachse wirkendes Knetorgan bewegt um, infolge direkter Beschickung der Kammer mit vordosierten Zutaten, je Arbeitszyklus, in relativ kurzem Zeitabschnitt, eine Teigportion herzustellen welche endlich als vermengte und zusammengeballte Einzelportion, vorgefertigt für die folgende Formgebung, die eventuelle Garnierung und den Back- oder Tiefkühlvorgang, ausgeworfen wird.

Zur Lösung dieser Aufgabe schlägt die Erfindung vor ein Gehäuse zu schaffen dessen innere Kammer wesentlich zylindrisch ist und im oberen, dem Beschickungsbereich für die mehlartigen und eventuell auch die flüssigen Zutaten entsprechenden, Abschnitt sowie auch im unteren, dem Auswurfbereich entsprechenden, Abschnitt, einen ebenen Oberflächenbereich aufweist welcher parallel zur Achse der Kammer verläuft und in die Mantelfläche der Kammer übergeht. Innerhalb dieser Kammer wirkt ein, gemäß einer koaxial oder parallel zur Achse der Kammer verlaufenden Achse, rotierendes Knetorgan, wobei dieses aus mindestens einem, mit einem Ende radial am Ende einer Antriebswelle angebrachten, Arm gebildet wird, an dessen anderem Ende mindestens ein feststehender Lagerzapfen, freitragend und mit parallel zur Rotationsachse der Antriebswelle verlaufender Achse, befestigt ist, auf welchen Zapfen eine frei drehbare Hülse mit beidseits abgerundeten Endbereichen, mittels Blindbohrung, aufgesteckt ist. Vorteihafterweise werden zwei radial von der selben Antriebswelle abstehende Arme vorgesehen sein welche zueinander in Längsrichtung ausgerichtet sind oder zwar in einer gleichen Ebene liegen aber zueinander angewinkelt sind, wobei jeder dieser Arme einen Lagerzapfen mit aufgesteckter, parallel zur Antriebsachse drehbarer Hülse, vorzugsweise mit unterschiedlichem Abstand zur Rotationsachse der Antriebswelle, trägt. Während der Bewegung dieser, mit drehbaren Hülsen ausgestatteten, Lagerzapfen erfährt der Teig, durch die frei drehbaren Hülsen, insbesondere im unteren Bereich der Kammer mit dem ebenen Oberflächenabschnitt welcher in die gebogene Mantelfläche übergeht, eine wiederholte Verdichtung, Berollung und Auswalzung. In Gegenwart von mehreren dieser Hülsen können diese, in Bezug auf die Konsistenz des herzustellenden Teiges und/oder die Eigenschaften der Zutaten und/oder auf den Prozentanteiles der flüssigen Zutaten, unterschiedlichen Außendurchmesser, Querschnitt oder verschiedene Formen aufweisen. Die Erfindung sieht weiters die Austauschbarkeit und/oder die Änderung der Anzahl der genannten Hülsen, in Bezug auf die Eigenschaften der Zutaten und/oder des herzustellenden Teiges, vor.

Infolge der Beschickung der Kammer mit trockenen mehlartigen Zutaten führt das Knetorgan die Arbeitsphase zwecks Homogenisierung und Belüftung der trockenen Zutaten durch indem es sich mit relativ hoher Drehzahl bewegt um so, in relativ kurzer Zeit, eine bessere Durchmischung der eingebrachten Zutaten und deren Vorbereitung für die folgende Einbringung der flüssigen Zutaten durchzuführen wodurch eine gleichmäßige Absorbtion gesichert wird und, bei anschließender merklicher Drehzahlvermindedrung, ein Teigagglomerat erzeugt wird; durch anschließende weitere Drehzahlverminderung wird ein Vermengen und Homogenisieren der Teigmasse erreicht welche anschließend, bei noch weiter reduzierter Drehzahl, verdichtet und zu einer Einzelportion zusammengeballt wird welche als solche, unter Einwirkung von Fliehkraft endlich durch Öffnen der Auswurföffnung im Bereich welcher dem unteren ebenen Oberflächenabschnitt der Kammer entspricht, ausgeworfen wird.

Nachdem erfindungsgemäß die einzelnen Innenoberflächen und Flächenbereiche der Kammer der Knetmaschine Flächenübergänge mit Abrundungen mit möglichst großem Radius und, sei es die sich drehenden Arme als auch die Hülsen, des Knetorgans abgerundete Formen aufweisen, präsentiert sich der Kammerinnenraum frei von Kanten oder Ausnehmungen an welchen, infolge des Knet- und Zusammenballungsvorganges, nicht mit der ausgeworfenen Einzelporzion vermengte, Teigreste haftend zurückbleiben könnten. Nach der Zusammenballung und dem Auswurf wird die Kammer und das Knetorgan also suber und frei von jeglichen Teigresten oder Zutatenresten sein. Weiters eignet sich diese Formgebung der Kammerinnenflächen und des Knetorgans für eine Sterilisierung mittels Heißluft durch welche auch eventuelle verklebte kleine Teigrückstände durch Trocknung und unter Druckeinwirkung abgelöst und, im Luftstrom schwebend, ausgeblasen werden.

Die stirnseitige Oberfläche der Kammer, welche jener zweiten stirnseitigen Oberfläche aus der die Antriebswelle für das Knetorgan hervorragt gegenüberliegt, kann ebene, konische gegen die Antriebswelle vorspringende oder mehr oder weniger abgerundete, Form haben, wobei sich deren Achse koaxial zur Rotationsachse der Antriebswelle oder parallel zu dieser, vorzugsweise im oberen Bereich der Kammer erstreckt. Durch eine ausgeprägte konische oder nasenkonische Form kann erreicht werden, daß die rotierenden Hülsen des Knetorgans auch gegenüber diese Ausformung einen Auswalzeffekt ausüben. Erfindungsgemäß kann weiters jene Gehäusewand welche dieser stirnseitigen, mit mehr oder weniger ausgeprägten Ausformungen versehenen, Innenfläche entspricht, durch eine andere Gehäusewand ausgetauscht werden um, durch Veränderung des Abstandes zwischen den stirnseitigen Kreisflächen, das Volumen der Kammer zu verändern; in diesem Fall werden auch die Hülsen am Knetorgan durch Hülsen mit geeigneter Längserstreckung ausgetauscht.

Vorteilhafterweise wird die flüssige Zutat, bzw. werden die flüssigen Zutaten, für die Zubereitung des Teiges durch eine oder durch mehrere Öffnungen, im zentralen Bereich, an jener stirnseitigen Wand welche der Wand mit Antriebswelle entgegenliegt, eingeführt.

Was die volumetrische Dosierung der trockenen, mehlartigen Zutaten betrifft, schlägt die Erfindung vor, im Bereich der mit, z.B. gleitendem, Schieber ausgestatteten Beschickungsöffnung der Knetmaschine, eine Dosiervorrichtung vorzusehen welche wesentlich aus einem zylindrischen Behälter mit vertikaler Achse für das Mehl besteht, wobei dieser am Boden mit einem volumetrischen Dosiermechanismus ausgestattet ist. Dieser Behälter weist erfindungsgemäß, innen, im unteren Bereich, eine ringförmige, trichterartige Scheidewand auf, durch deren zentrale, kreisförmige Öffnung die Spitze eines Verteilerkonus ragt so, daß ein ringförmiger Durchlaß für das Mehl frei bleibt. Im Bodenbereich des Behälters ist ein Dosiergitter vorgesehen über welchem, während der Rotation des Verteilerkonus welcher über eine vertikale zentrale Welle durch einen Motor angetrieben wird, sich Rührstäbe bewegen um das Mehl, durch das Dosiergitter hindurch, in die durchgehenden Bohrungen zu befördern, welche ringförmig mit gleichem Abstand zur Rotationsachse an der darunterliegenden Dosierscheibe vorgesehen sind. Die Dosierscheibe liegt an der Bodenscheibe auf welche mit der zylindrischen Wand des Behälters verbunden ist und welche im Bereich der Beschickungsöffnung der darunter angebrachten Knetmaschine, eine Bohrung aufweist durch welche das Mehl aus den Dosierbohrungen an der sich drehenden Dosierscheibe und durch die Beschickungsöffnung in die Kammer der Knetmaschine fällt.

Die Erfindung schließt nicht aus, daß die erfindungsgemäße Knetmaschine von einer Dosiervorrichtung welche andere Merkmale als die von der Erfindung vorgeschlagenen aufweist, oder von einer Vorrichtung welche eine Beschickung mit vorportionierter Dosis durchführt, gespeist wird.

Die Erfindung wird anschließend anhand eines, in den beigelegten Zeichnungen schematisch dargestellten, vorzuziehenden Ausführungsbeispieles einer, mit Einzeldosis erfindungsgemäß beschickten, erfindungsgemäßen Knetmaschine für die Zubereitung von Einzelportionen von ca. 130-260 g. in einer Zeit von ca. 10 - 15 Sekunden, welche insbesondere für die Herstellung von Fladen oder Pizzas geeignet ist, näher erklärt.

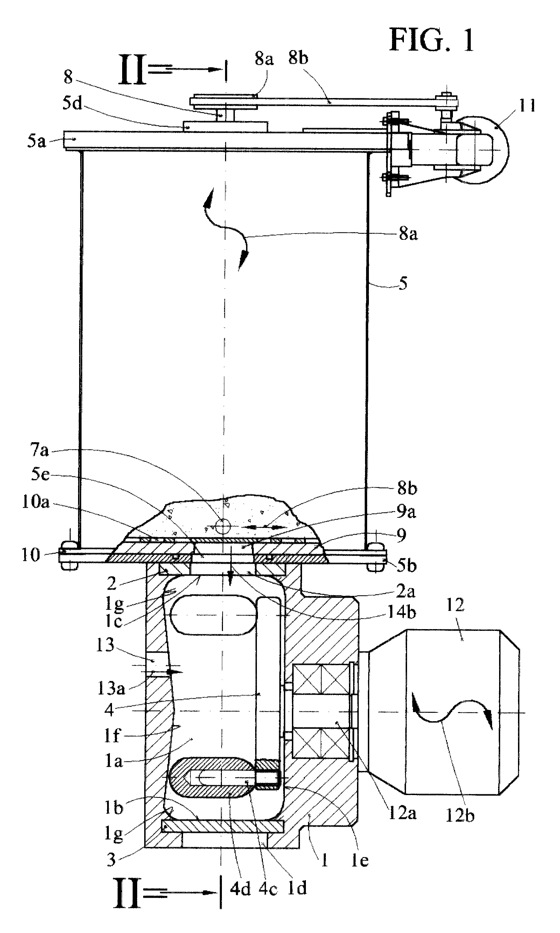

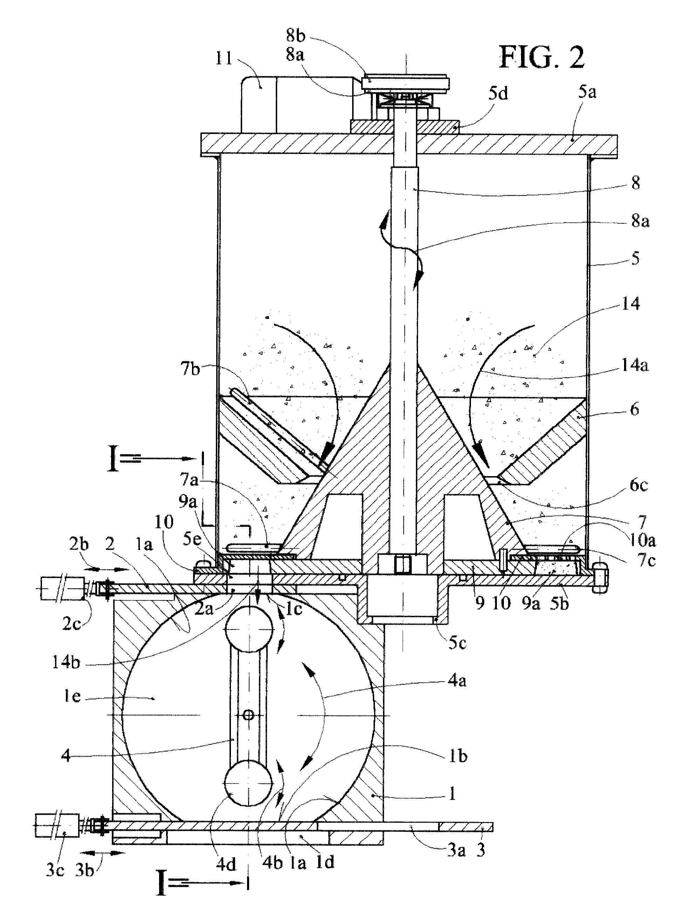

Die Fig. 1 zeigt eine erfindungsgemäße Knetmaschine in Beschickungsphase welche mit einer erfindungsgemäßen Dosiervorrichtung gekoppelt ist in Schnittdarstellung gemäß der in Fig. 2 gezeigten Schnittfläche I-I welche durch die Achse der Antriebswelle der Dosiervorrichtung verläuft.

Die Fig. 2 zeigt die in Fig. 1 dargestellte erfindungsgemäße Knetmaschine samt Dosiermaschine in Schnittdarstellung gemäß der in Fig. 1 gezeigten Schnittlinie II-II.

Die erfindungsgemäße Knetmaschine für die Zubereitung von Einzelportionen besteht wesentlich aus einem Gehäuse 1 mit innerer Kammer und Knetorgan 4, 4c, 4d, welche eine Beschickungsöffnung 2a und eine Auswurföffnung 3a, 1d, mit entsprechenden Schiebern 2, 3, aufweist. Die wesentlich zylindrische Kammer mit horizontaler Achse ist durch eine ebene Kreisfläche 1e aus welcher koaxial eine Welle 12a ragt, durch einer Kreisfläche 1f welche der vorgenannten entspricht aber eine leicht in die Kammer vorspringende konische Form aufweist, durch zwei gebogenen Flächenabschnitten 1a mit, von der Kammerachse gleich entfernten Mantellinie, durch einen oberen ebenen Flächenabschnitt 1c welcher wesentlich dem Bereich der Beschickungsöffnung 2a entspricht und durch einen unteren ebenen Flächenabschnitt 1b, welcher größer als der obere ist und dem Bereich der Auswurföffnung 1d, 3a entspricht, begrenzt.

Das Knetorgan besteht aus einem Arm 4 welcher stirnseitig am, ins Kammerinnere ragende, Ende der Antriebswelle 12a befestigt ist; an jedem der Enden des Arms 4 ist ein Zapfen 4c befestigt dessen Achse parallel zur Rotationsachse der Antriebswelle 12a verläuft, auf jeden dieser Zapfen 4c ist eine sich frei drehende 4b Hülse 4d mit abgerundeten, halbkugelförmigen oder nasenkonusförmigen Endbereichen, mittels blinder Bohrung aufgesteckt. Der Arm 4 des Knetorgans ist an der Antriebswelle 12a, bezüglich der querverlaufenden Mittellinie des Arms, außermittig befestigt um zu erreichen, daß die zwei daran befestigten Zapfen 4c mit den Hülsen 4d, mit unterschiedlichem Radius sich um die Rotationsachse der Antriebswelle 12a, welche durch den Elektromotor 12 mit verschiedenen Drehzahlen und Änderung der Drehrichtung angetrieben wird, drehen 4a.

Die Beschickungsöffnung 2a für die Einführung 14b der mehlartigen Zutaten im oberen Bereich und die Auswurföffnung 3a, 1d für die zusammengeballte Teig-Einzelportion im unteren Bereich, sind mit gleitenden Schiebern 2, 3 versehen welche beispielsweise durch Pneumatikzylinder 2c, 3c bewegt 2b, 3b werden, ohne jedoch den Einsatz von rotierenden Schiebern und anderen Antrieben auszuschließen.

Die Beschickung mit den flüssigen Zutaten erfolgt über eine einzige Bohrung 13 oder über spezifische Bohrungen für jede der flüssigen Zutaten welche alle vorzugsweise an der scheibenförmigen Wand 1f mit konischer Ausformung vorgesehen sind und zwar im Bereich innerhalb der Laufbahn jener Hülse 4d welche sich mit kleinerem Radius um die Welle dreht 4a. Die selbe Bohrung 13 kann für das Einblasen von Heißluft benützt werden um eine Reinigung und/oder eine Sterilisierung der Kammer und der rotierenden Knetorgane 4, 4c, 4d zu erzielen. Das Verfahren für die Zubereitung des Teiges mittels der erfindungsgemäßen Knetmaschine läuft wesentlich nach folgenden Phasen ab:
- Beschickung 14b mit den mehl- und/oder staubartigen Zutaten,
- Homogenisierung und Belüftung der mehl- und/oder staubartigen Zutaten,
- Beschickung 13a mit den flüssigen Zutaten,
- Zubereitung des Teiges,
- Auswalzen des Teiges,
- Verdichtung und Zusammenballung des Teiges,
- Auswurf der Teig-Einzelportion.

Nach der Produktion einer vorprogrammierten Anzahl von Teigportionen, unter Berücksichtigung der Produktionsintervalle, wird die Kammer der Knetmaschine einer Säuberung und Sterilisierung durch Heißluft unterzogen.
- Die Beschickung 14b mit den mehl- und/oder staubartigen Zutaten erfolgt durch freien Fall durch die Beschickungsöffnung 2a hindurch welche mit einem gleitenden, durch Pneumatikzylinder 2c angetriebenen 2b, Schieber 2 versehen ist. Der Aufbau und die Arbeitsweise der erfindungsgemäßen Dosiervorrichtung welche mit ihrer Auswurföffnung 5e, übereinstimmend mit der Beschickungsöffnung 2a der Knetmaschine, mit dieser gekoppelt ist, werden später erklärt.
- Die Homogenisierung und Belüftung der mehl- und/oder staubartigen Zutaten erfolgt durch Rotieren des Knetorgans 4, 4c, 4d zu einer relativ hohen Drehzahl (ca. 2.500 - 3.000 U/min.) wodurch ein, durch die besondere Ausformung der Kammer und der Knetorgane, begünstigtes Verstreuen der Zutaten erfolgt, wodurch die Teilchen der trockenen Zutaten für gleichmäßige Aufnahme der flüssigen Zutaten, infolge der Beschickung 13a, vorbereitet sind.
- Die Zubereitung der Teigmischung erfolgt durch Rotieren 4a des Knetorgans 4, 4c, 4d zu einer niedrigeren Drehzahl (ca. 950 - 1.400 U/min.); in diese Phase erfolgt anfänglich die Bildung von Teigklümpchen welche anschließend durch die wiederholte Wirkung der rotierenden 4b Hülsen 4d zusammengewalzt werden.
- Die Zubereitung des Teiges erfolgt anschließend durch Rotieren des Knetorgans 4, 4c, 4d zu einer noch niedrigeren Drehzahl (ca. 850 - 920 U/min.), insbesondere in dieser Phase wird der Teig durch die sich drehenden 4b Hülsen 4d wiederholt und intensiv, besonders auf der unteren ebenen Fläche 1b gerollt und ausgewalzt.
- Die Bildung einer kompakten und zusammengeballten Teigmasse erfolgt zu einer noch niedrigeren Drehzahl (ca. 700 ―820 U/min.) um am Ende dieser Phase die Form eines "Teigballens" anzunehmen.
- Der Auswurf des "Teigballens" erfolgt durch Fliehkraft welche über das rotierende Knetorgan wirkend wird und durch Schwerkraft, durch die Auswurföffnung 3a hindurch deren Öffnen durch Betätigen 3b des Schiebers 3 seitens Pneumatikzylinder 3c erfolgt.

Während der verschiedenen Arbeitsabläufe, insbesondere während der Verdichtung, dem Auswalzen, und dem Zusammenballen, kann es vorteilhaft sein eine oder mehrere Änderungen der Drehrichtung 4a des Knetorgans 4, 4c, 4d durchzuführen. Die Beschickung 13a mit den flüssigen Zutaten kann mehr oder weniger stufenweise und während der Rotation des Knetorgans 4, 4c, 4d erfolgen. Zur Säuberung und/oder Sterilisierung der Kammer durch Einblasen von Heißluft, kann die Kühlluft des, das Knetorgan antreibenden 12a, Motors 12 oder, von der Pneumatikanlage abgezweigte, Luft genutzt werden welche, vor dem Einblasen in die Kammer, erhitzt wird.

Die erfindungsgemäße, volumetrische Dosiervorrichtung für die trockenen mehlartigen Zutaten besteht wesentlich aus einem zylindrischen Behälter 5,5a, 5b mit vertikaler Achse, aus einem, koaxial zur Behälterachse rotierenden 8a Verteilerkonus 7 mit Rührstäben 7a, 7b und aus einer Dosierscheibe 9 mit einem Kranz von Dosierbohrungen 9a welche die Volumeneinheiten zur Bildung der Gesamtdosis an Mehl 14 darstellen mit welcher die Knetmaschine 1 beschickt 14b wird um eine Teig-Einzelportion zu erzeugen.

Die zylindrische vertikale Wand 5 ist unten durch eine Bodenplatte 5b verschlossen welche zentral eine Lagerung 5c für das untere Ende einer vertikalen rotierenden 8a Welle 8 aufweist welche im oberen Bereich zentral in der Deckelplatte 5a gelagert 5d ist. Das obere Ende dieser Welle 8 welches über die Deckelplatte 5a hinausragt, ist mit einer Riemenscheibe 8a für einen, durch am Behälter befestigten Motor 11 angetriebenen Riemen 8b, versehen. Natürlich kann der Antrieb der Welle 8 auch auf andere Weise und über andere Antriebsmittel erfolgen. Innen, im unteren Bereich, ist der Behälter mit einer ringförmigen, trichterartigen Scheidewand 6 versehen um das Mehl 14 in Richtung Behälterachse zu leiten. Durch die zentrale Öffnung in dieser Scheidewand 6 hindurch ragt der obere Bereich eines, mit der Antriebswelle 8 verbundenen, Verteilerkonus 7 so, daß zwischen dem Konus und der Scheidewand 6 ein freier ringförmiger Durchlaß 6c für das Mehl 14 entsteht; das Durchsickern 14a des Mehles wird durch, vom Konus 6 abragende Rührstäbe 7b welche sich dicht über der Scheidewand 6 bewegen, aktiviert. Die Scheidewand 6 zusammen mit dem Konus 7 verhindert, daß das Variieren des Füllstandes des Mehles 14 und somit des Gewichtes oberhalb der Scheidewand 6, sich auf den darunter vorgesehenen Dosiermechanismus auswirkt. Dieser Mechanismus besteht aus einer, mit einem Kranz von Bohrungen 9a versehenen, Dosierscheibe 9 welche, zusammen mit dem Verteilerkonus 7 und der Antiebswelle 8, rotiert; dabei stellen die einzelnen Bohrungen 9a, welche zur Drehachse der Scheibe gleichen Abstand haben, mit ihrem Volumen die Dosiereinheit für die Bildung der Beschickungsdosis dar. Über dieser Dosierscheibe 9 ist ein Gitter 10 mit Durchlässen 10a vorgesehen durch welche das Mehl, durch mindestens einen vom Konus 7 abstehenden und mit der Antriebswelle 8 sich drehenden 8a Rührstab 7c, welcher sich über dem Gitter 10 bewegt, hindurchbewegt wird. An der Unterseite liegt die Dosierscheibe 9 auf der Bodenscheibe 5b des Behälters auf. Diese Bodenscheibe 5b weist eine durchgehende Enleerungsbohrung 5e auf welche dem Durchmesser der Bohrungen 9a an der Dosierscheibe 9 entspricht oder größer als deren Durchmesser ist und sich im Bereich des Durchlaufes dieser Bohrungen befindet. Die Praxis hat gezeigt, daß durch diese beschriebene Konstruktion es möglich ist, unabhängig vom Füllstand im Behälter, dem Feuchtigkeitsgrad und der anderen physikalischen Eigenschaften des Inhaltes, eine volumetrische Dosierung durchzuführen welche ausreichend konstant und eventuell nach Wunsch um eine oder mehrere, durch die einzelnen Bohrungen 9a an der Dosierscheibe 9 bestimmte, Volumeneinheiten variiert werden kann.

Dieses Merkmal der Dosiervorrichtung ist grundlegend um eine Homogeneität in den Teig-Einzelportionen zu erreichen welche eine Beschickung mit kalibrierten und homogenisierten Zutaten voraussetzt und vor allem dadurch erreicht wird, daß in einem einzigen Gehäuse 5, 5a, 5b welches, sei es als Behälter, als auch als Dosierer funktioniert, die Masse des Inhaltes nicht den darunter vorgesehenen Dosiermechanismus belastet welcher über einen relativ schmalen ringförmigen Durchlaß 6c und unter Wirkung von gleichzeitigen Mischbewegungen im Behälterbereich über der Scheidewand 6 und im Abfüllbereich der Dosierlöcher 9a an der Dosierscheibe 9, gespeist wird. Natürlich muß die Menge des Mehles 14 welche sich durch den ringförmigen Durchlaß 6c bewegt mindestens gleich groß, vorzugsweise etwas größer, in Bezug auf die Menge welche als Dosis der Knetmaschine, zwecks Erhaltung der Einzel-Teigportion, zugeführt wird, sein.

Die Erfindung schließt nicht aus die erfindungsgemäße, Dosiervorrichtung mit einer Knetmaschine oder mit einer anderen Vorrichtung zu koppeln welche nicht der erfindungsgenäßen Knetmaschine entspricht.

## Patentansprüche

1. Knetmaschine zur Herstellung von Teig für Teigwaren, welche mit einer Dosiervorrichtung für die mehlartigen Zutaten ausgestattet ist, von der Art mit geschlossenem Gehäuse mit horizontaler Achse in welchem ein Knetorgan mit, zur Gehäuseachse koaxialer oder paralleler Drehachse wirkt, **dadurch gekennzeichnet, daß** die Kammer der Knetmaschine innerhalb des Gehäuses (1) zwei innere wesentlich kreisförmige, sich gegenüberstehende, zueinander koaxiale und beabstandete Flächen (1e, 1f) aufweist zwischen denen sich zwei Mantelflächenabschnitte (1a) erstrecken welche kreisbogenförmig und mit der selben Mantellinie verlaufen und im oberen und unteren Bereich in einen ebene Flächenabschnitt (1b, 1c) übergehen, wovon jeder mindestens teilweise durch die Oberfläche eines gleitenden (2c, 3c) Schiebers (2, 3) in Schließstellung gebildet ist; daß entlang dem Umfangsbereich an beiden kreisförmigen Flächen(1e, 1f) zu den Mantelflächenabschnitten (1a) und zu den ebenen Flächenabschnitten (1c, 1b) ein Übergang (1g) mit großem Abrundungsradius vorgesehen ist und daß die Kreisfläche (1f) welche der ebenen Kreisfläche (1e) aus welcher die Antriebswelle (12a) für das Knetorgan ((4, 4c, 4d) hervorragt entgegensteht, eine leicht konische oder gewölbte, in das Kammerinnere, koaxial zur Rotationsachse des Knetorgans (4, 4c, 4d) vorstehende, Form hat.

2. Knetmaschine mit Dosiervorrichtung gemäß Patentanspruch 1, **dadurch gekennzeichnet, daß** in der Kammer der Knetmaschine, die Kreisfläche (1f) welche der Kreisfläche (1e) aus welcher die Antriebswelle (12a) für das Knetorgan (4, 4c, 4d) ragt, eine ausgeprägte konische, nasenkonische oder zylindrische Form mit halbkugelförmigem Ende hat welche koaxial oder parallel zur Rotationsachse des Knetorgans (4, 4c, 4d) ist.

3. Knetmaschine mit Dosiervorrichtung gemäß Patentanspruch 1, **dadurch gekennzeichnet, daß** die Kreisfläche (1f) welche der Kreisfläche (1e) aus welcher die Antreibswelle (12a) für das Knetorgan (4, 4c, 4d) hervorragt, eine oder mehrere Bohrungen (13) für die Zuführung der flüssigen Zutaten aufweist und daß die Bohrung oder die Bohrungen (13) in einem zentralen Bereich der Kreisfläche (1f) vorgesehen sind welcher innerhalb der kreislinienförmigen Laufbahn der Enden des Knetorgans (4, 4c, 4d) liegt.

4. Knetmaschine mit Dosiervorrichtung gemäß Patentansprüche von 1 bis 3. **dadurch gekennzeichnet, daß** die Kammer der Knetmaschine samt dem Knetorgan (4, 4c, 4d) von Zeit zu Zeit dem Durchzug von Heißluft ausgesetzt werden welche durch eine eigene Bohrung oder Düse oder durch eine oder mehrere Bohrungen (13) welche für die Beschickung mit den flüssigen Zutaten vorgesehen sind, eingeblasen wird und durch die Auswurföffnung (3a, 1d) abfließt und daß dieser Luftdurchzug durch den Antriebsmotor (12) der Knetmaschine oder von einer pneumatischen Anlage erzeugt und vor dem Einblasen erhitzt wird um die Sterilisierung der Kammer und des Knetorgans und das Loslösen eventueller Teigteilchen oder von Zutatenresten und deren Beförderung im austretenden Luftstrom zu erreichen.

5. Knetmaschine mit Dosiervorrichtung gemäß Patentanspruch 1, **dadurch gekennzeichnet, daß** das Knetorgan der Knetmaschine aus einem Arm (4) besteht welcher radial vom Ende der Antriebswelle (12a) absteht und von dessen freien Ende ein feststehender Zapfen (4c) mit parallel zur Rotationsachse des Arms verlaufenden Achse befestigt ist an welchem eine zylindrische Hülse (4d) mittels axialer Blindbohrung aufgesteckt ist und daß beide Endbereiche der Hülse (4d), abgerundet, kugelkuppen- oder nasenkonusförmig sind.

6. Knetmaschine mit Dosiervorrichtung gemäß Patentanspruch 1 und teilweise gemäß Patentanspruch 2, **dadurch gekennzeichnet, daß** das Knetorgan aus zwei oder mehreren Armen (4) besteht welche radial vom Ende der Antriebswelle (12a), eventuell zueinander unterschiedlich angewinkelt, abstehen und an deren Enden jeweils ein feststehender Zapfen (4c) mit, zur Rotationsachse der Arme (4), paralleler Längsachse befestigt ist, an welchen jeweils Hülsen (4d) aufgesteckt sind welche gegebenenfalls unterschiedlichen Außendurchmesser und/oder unterschiedliche Form aufweisen und daß die Achsen der einzelnen Zapfen (4c) an den jeweiligen Armen (4) nicht gleichen Abstand zur gemeinsamen Rotationsachse haben.

7. Knetmaschine mit Dosiervorrichtung gemäß den Patentansprüchen von 1 bis 6, **dadurch gekennzeichnet, daß** die Wand mit jener stirnseitigen Kreisfläche (1f) der Kammer der Knetmaschine, welche der stirnseitigen Kreisfläche (1e) aus welcher die Antriebswelle (12a) für das Knetorgan (4, 4c, 4d) ragt, entgegensteht, mit Wänden austauschbar ist welche geeignet sind den Abstand zwischen den beiden stirnseitigen Flächen (1e, 1f) zu verändern und daß, in Abhängigkeit dieser Veränderung, auch die Hülsen (4d) ausgetauscht werden können.

8. Knetmaschine mit Dosiervorrichtung gemäß dem Schutzanspruch 1, **dadurch gekennzeichnet, daß** die an der Knetmaschine angebrachte Dosiervorrichtung innerhalb dem selben zylindrischen Behälter (5, 5a, 5b) mit vertikaler Achse im oberen Bereich Staubereich für das Mehl (14) und im unteren Bereich einen Dosiermechanismus beinhaltet, wobei die Rührorgane (7b) für den Staubereich des Mehles, zusammen mit den Rührorganen (7a) des Dosiermechanismus durch eine gemeinsame, mit der Behälterachse koaxiale, Welle (8) betätigt werden und daß diese Welle außerdem mit einem Vertilerkonus (7) für das Mehl zum Dosierbereich und mit einer, mit einem Kranz von unter sich und zur Drehachse gleich beabstandeten Dosierbohrungen (9a) versehenen, Dosierscheibe (9) verbunden ist.

9. Knetmaschine mit Dosiervorrichtung gemäß den Patentansprüchen 1 und 8, **dadurch gekennzeichnet, daß** im Behälter der Dosiervorrichtung, der Staubereich für das Mehl (14), in Bezug zum Dosierbereich, durch eine ringförmige, trichterartige Scheidewand (6), durch deren zentrale Öffnung der obere Teil des Verteilerkonus (7) ragt, um einen ringförmigen Durchlaß (6c) für das Mehl (14) zu bilden, horizontal unterteilt ist und daß mindestens ein Rührelement (7b) welches radial vom Verteilerkonus (7) abragt, nahe der oberen Fläche der Scheidewand (6), wirkt.

10. Knetmaschine mit Dosiervorrichtung gemöß den Patentansprüchen 1, 8 und 9, **dadurch gekennzeichnet, daß** in der Dosiervorrichtung der Dosiermechanismus, bestehend aus einer Dosierscheibe (9) mit durchgehenden Dosierbohrungen (9a), von der selben Welle (8) angetrieben (8a) wird welche den Verteilerkonus (7) samt den Rührelementen (7a, 7b) antreibt, daß diese Dosierscheibe drehbar zwischen der feststehenden, ebenen Bodenplatte (5b) des Behälters der Dosiervorrichtung und einem ringförmigen, feststehendem Gitter (10) gelagert ist, wobei die Bodenplatte (5b) die untere Auflage bildet und das Gitter (10) den oberen, vom Verteilerkonus (7) freien Ringbereich der Dosierscheibe (9) abdeckt und daß die Bodenplatte (5b), im Bereich der Laufbahn der Dosierbohrungen (9a) der Dosierscheibe (9), eine durchgehende Entleerungsöffnung (5e) aufweist.

11. Knetmaschine mit Dosiervorrichtung gemäß den Patentansprüchen 1, 8, 9, 10, **dadurch gekennzeichnet, daß** innerhalb der Dosiervorrichtung, das Gitter (10) welches die Dosierscheibe (9) mindestens im Bereich der Laufbahn der Dosierbohrungen (9a) abdeckt, im Entleerungsbereich welcher durch die Entlehrungsbohrung (5e) an der Bodenplatte (5b) definiert ist, keine Durchlässe (10a) für das Mehl aufweist und daß mindestens ein, vom Verteilerkonus (7) abstehendes Rührorgan (7a), während dessen Drehung (8a), nahe der Oberfläche des Gitters vorbeistreicht.

12. Knetmaschine und Dosiervorrichtung gemäß den Patentansprüchen von 1 bis 11, **dadurch gekennzeichnet, daß** jede der beiden Vorrichtungen auch voneinander unabhängig funktionieren kann, wobei eventuell die Knetmaschine mit einer Dosiervorrichtung bekannter Art, bzw. die Dosiervorrichtung mit einer Knetvorrichtung bekannter Art gekoppelt sein kann.
